# EUROPÄISCHE PATENTSCHRIFT

(11) **EP 3 044 137 B1**
(45) Veröffentlichungstag und Bekanntmachung des Hinweises auf die Patenterteilung: **02.01.2019**
(21) Anmeldenummer: 14750208.2
(22) Anmeldetag: 07.08.2014
(51) Int. Cl.: B65G 47/08, B65B 17/02, B65B 27/04, B65G 47/28

(54) **VERFAHREN UND BEHÄLTERTRANSPORTEUR ZUM UMFORMEN EINES BEHÄLTERSTROMES, SOWIE VORRICHTUNG DAMIT**
METHOD AND CONTAINER CONVEYOR FOR REARRANGING A CONTAINER FLOW, AND DEVICE HAVING SAME
PROCÉDÉ ET CONVOYEUR DE RÉCIPIENTS SERVANT À TRANSFORMER UN FLUX DE RÉCIPIENTS, ET DISPOSITIF ÉQUIPÉ D'UN TEL CONVOYEUR

(30) Priorität: 13.09.2013 DE 102013110099
(43) Veröffentlichungstag der Anmeldung: 20.07.2016
(73) Patentinhaber: KHS GmbH, 44143 Dortmund (DE)
(72) Erfinder: JOEHREN, Thomas, 46395 Bocholt (DE); NITSCH, Thomas, 47533 Kleve (DE)
(86) Internationale Anmeldenummer: PCT/EP2014/067029
(87) Internationale Veröffentlichungsnummer: WO 2015/036185

(56) Entgegenhaltungen:
- WO-A1-2013/079852
- DE-A1- 2 913 446
- DE-A1- 3 045 505
- DE-A1-102012 100 810
- DE-C- 641 035
- DE-U1- 8 711 599

## Beschreibung

Die Erfindung bezieht sich auf ein Verfahren gemäß Oberbegriff Patentanspruch 1, auf einen Behältertransporteur gemäß Oberbegriff Patentanspruch 5 sowie auf eine
Vorrichtung zum Behandeln von Behältern gemäß Oberbegriff Patentanspruch 10.

Ein solches Verfahren, ein solcher Behältertransporteur und eine solche Vorrichtung sind zum Beispiel aus der WO 2013/079852 A1 bekannt. U.a. in der Lebensmittel- und Getränkeindustrie ist es vielfach erforderlich, einen angeförderten, beispielsweise dicht gepackten Behälterstrom in einen Behälterstrom umzuwandeln, in dem die in einer Transportrichtung aufeinanderfolgenden Behälter einen vorgegebenen gegenseitigen Abstand voneinander aufweisen, der einem erforderlichen Teilungsabstand einer nachfolgenden Maschine oder Vorrichtung zum Behandeln der Behälter entspricht. Die hierfür verwendeten Behältertransporteure bilden beispielsweise den Behältereinlauf einer Vorrichtung zum Reinigen, Desinfizieren, Füllen und/oder Verschließen von Behältern sowie auch den Behältereinlauf von Vorrichtungen zum Herstellen von Gebinden aus jeweils mehreren Behältern. Üblicherweise ist an derartigen Behältertransporteuren seitlich an einer Transportstrecke wenigstens eine Einteilschnecke vorgesehen, in der die beispielsweise zunächst als einspuriger Behälterstrom zugeführten Behälter voneinander beabstandet werden und mit dem erforderlichen Teilungsabstand jeweils einzeln an Behälteraufnahmen eines anschließenden Transportsternes übergeben werden, der den Auslauf des Behältertransporteurs und/oder den Einlauf-oder Übergabestern einer Vorrichtung zum Behandeln der Behälter bildet. Nachteilig hierbei ist, dass es durch die Relativbewegungen zwischen der jeweiligen Einteilschnecke und den in dieser angeordneten Behältern vielfach zu Beschädigungen an den Behältern und insbesondere an Ausstattungsmerkmalen der Behälter kommt. Dieser Nachteil ist besonders gravierend bei Vorrichtungen zum Herstellen von Gebinden aus jeweils mehreren Behältern, da die betreffenden Behälter bereits gefüllt, verschlossen und mit Ausstattungsmerkmalen, d.h. mit Etiketten, Folierungen, Aufdrucken usw. versehen sind.

Ausstattungsmerkmale im Sinne der Erfindung sind Elemente, die auf die Behälter als Informations- und/oder Werbeelement oder -hinweis und/oder zur Erzeugung eines Garantie- und/oder Originalitätsnachweises und/oder zur Erzeugung eines angestrebten optischen Behälter-Erscheinungsbildes aufgebracht werden.

Ausstattungsmerkmale in diesem Sinne sind insbesondere Etiketten, Banderolen, Folierungen, aber auch auf die Behälter aufgebrachte Druckbilder usw.

"Behälter" sind im Sinne der Erfindung insbesondere Dosen, Flaschen, jeweils aus Metall, Glas und/oder Kunststoff, aber auch andere Packmittel, insbesondere auch solche die zum Abfüllen von pulverförmigen, granulatartigen, flüssigen oder viskosen Produkten geeignet sind.

"Dicht gepackter Behälterstrom" bzw. "verdichteter Behälterstrom" bedeutet im Sinne der Erfindung einen Behälterstrom, in welchen die Behälter dicht gegen einander anliegen oder dicht auf einander folgen.

Aufgabe der Erfindung ist es, ein Verfahren aufzuzeigen, welches die vorgenannten Nachteile vermeidet. Zur Lösung dieser Aufgabe ist ein Verfahren entsprechend dem Patentanspruch 1 ausgebildet. Ein Behältertransporteur sowie eine Vorrichtung zum Behandeln von Behältern sind Gegenstand der Patentansprüche 5 bzw. 10.

Die Erfindung vermeidet die Verwendung von Einteilschnecken und die hiermit verbundenen Nachteile. Das Umformen des Behälterstroms erfolgt behälter- und ausstattungsschonend durch die die Behälter mitführenden Mitnehmer der an der Umformstrecke vorgesehenen Umformeinheit, und zwar ohne dass die Behälter oder deren Ausstattung beschädigende Scher- und Relativbewegungen bzw. entsprechende Kräfte zwischen Elementen der Umformstrecke und den Behältern auftreten.

Der erfindungsgemäße Behältertransporteur eignet sich insbesondere als Behältereinlauf von Vorrichtungen zum Behandeln von Behältern, z.B. bei Vorrichtungen zum Desinfizieren, Reinigen, Füllen und/oder Verschließen von
Behältern. Der erfindungsgemäße Behältertransporteur eignet sich auch als Behältereinlauf bei Vorrichtungen, die zum Herstellen von Gebinden aus jeweils mehreren Behältern dienen, z.B. auch bei solchen Vorrichtungen, die beispielsweise wenigstens zwei Behandlungsstrecken, denen die Behälter über jeweils einen einen Behältereinlauf bildenden Behältertransporteur zugeführt und mit Kleberaufträgen eines Klebers versehen werden, eine Transportstrecke, die auf die wenigstens zwei Behandlungsstrecken in einer Transportrichtung der Behälter zur Ausbildung eines wenigstens zweispurigen Behälterstroms folgt, sowie Mittel an der Transportstrecke aufweisen, und zwar zum Abtrennen der Behältergruppen aus dem Behälterstrom und zum Verdichten der Behältergruppen unter Verbindung der Behälter jeder Behältergruppe an den Kleberaufträgen zu einem Gebinde.

Bei Verwendung des erfindungsgemäßen Behältertransporteurs als Behältereinlauf einer Vorrichtung zur Bildung von Gebinden kann diese Vorrichtung beispielsweise so ausgeführt sein, dass die Mittel zum Abtrennen und Verdichten der Behältergruppen von die Behälter an ihrer Mantelfläche mit jeweils wenigstens einer Behälteraufnahme erfassenden, in einer Transportrichtung der Transportstrecke bewegten und die Behälter gegeneinander andrückenden Anpressköpfen gebildet sind, die jeweils paarweise an sich in der Transportrichtung erstreckenden Seiten der Transportstrecke aneinander gegenüberliegend vorgesehen sind,
und/oder
dass zur Herstellung von Gebinden mit mehreren in wenigstens zwei Reihen angeordneten und über die Kleberaufträge miteinander verbundenen Behältern jeweils mehrere Anpressköpfe, beispielsweise zwei oder drei Anpressköpfe jeweils eine sich entlang der Transportstrecke bewegende Anpresseinheit bilden, und dass die Anpresseinheiten paarweise, an der Transportstrecke einander gegenüberliegend vorgesehen sind,
und/oder
dass die Anpressköpfe an jeder Seite der Transportstrecke auf einer geschlossenen Bewegungs- oder Umlaufbahn bewegbar sind, von der sich eine Teillänge entlang der Transportstrecke erstreckt, wobei die Umlaufbahn vorzugsweise von einer Führung oder Führungsschiene für die Anpressköpfe gebildet ist,
und/oder
dass wenigstens ein mechanischer Antrieb zum Bewegen der Anpressköpfe und/oder der Anpresseinheiten vorgesehen ist, wobei beispielsweise der mechanische Antrieb eine Kette und/oder mit den Anpressköpfen in Umlenkbereichen der Umlaufbahn zusammenwirkende Antriebs- oder Zahnräder aufweist,
und/oder
dass ein elektrischer Linearantrieb für die Anpressköpfe und/oder Anpresseinheiten vorgesehen ist, wobei die Anpressköpfe als bewegliche Elemente oder Läufer des elektrischen Linearantriebs ausgebildet sind, und/oder
dass die Anpressköpfe jeweils einen an einer Führung oder Führungsschiene geführten Wagen oder Schlitten sowie ein die wenigstens eine Behälteraufnahme bildendes Kopfstück aufweisen, welches gesteuert für eine Zustell- und Anpressbewegung am Wagen oder Schlitten beweglich, vorzugsweise verschiebbar geführt ist,
und/oder
dass das jeweilige Kopfstück beispielsweise als Formatteil austauschbar am Wagen oder Schlitten vorgesehen ist,
und/oder
dass die Zustell- und Anpressbewegung des jeweiligen Kopfstücks kurvengesteuert erfolgt, und dass hierfür am Kopfstück wenigstens ein Führungsstück vorgesehen ist, welches in wenigstens eine ortsfeste Führung eingreift,
und/oder
dass bei Ausbildung der Anpresseinheiten mit jeweils mehreren mechanisch miteinander verbundenen Anpressköpfen ein Anpresskopf jeder Anpresseinheit, vorzugsweise der bezogen auf die Bewegung der Anpresseinheit nacheilende Anpresskopf für ein Zusammenwirken mit dem mechanischen Antrieb, beispielsweise mit der diesen Antrieb bildenden Kette ausgebildet ist,
wobei die vorgenannten Merkmale jeweils einzeln oder in beliebiger Kombination verwendet sein können.

Weiterbildungen, Vorteile und Anwendungsmöglichkeiten der Erfindung ergeben sich auch aus der nachfolgenden Beschreibung von Ausführungsbeispielen und aus den Figuren.

Der Ausdruck "im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Die Erfindung wird im Folgenden anhand der Figuren an einem Ausführungsbeispiel näher erläutert, und zwar zusammen mit einer Maschine oder Vorrichtung zum Behandeln von Behältern, die beispielhaft als Vorrichtung zum Herstellen von Gebinden aus mehreren Behältern in Form von Flaschen ausgebildet ist. Es zeigen:
- Fig. 1: in vereinfachter Darstellung und in Draufsicht ein Ausführungsbeispiel eines Behältertransporteurs gemäß der Erfindung;
- Fig. 2: eine vergrößerte Teildarstellung der Figur 1;
- Fig. 3: in schematischer Darstellung und in Draufsicht eine Vorrichtung zur Herstellung von Gebinden, mit zwei jeweils von einem Behältertransporteur der Figuren 1 und 2 gebildeten Behältereinläufen;

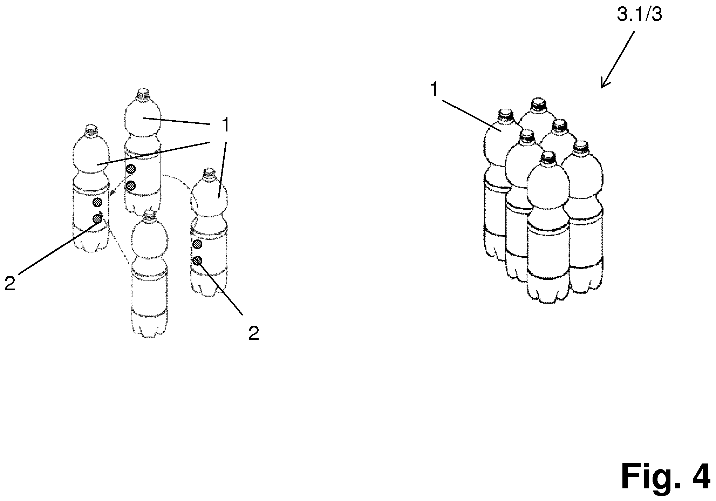

- Fig. 4: in schematischer perspektivischer Darstellung die Herstellung eines Gebindes aus mehreren Behältern in Form von Flaschen durch unmittelbares Verbinden der Behälter über Kleberaufträge eines Kontaktklebers;
- Fig. 5: in Draufsicht mehrere mit den Behältern entlang einer Transportstrecke mitbewegte Anpressköpfe der Vorrichtung der Fig. 3;
- Fig. 6 - 8: eine Gruppe von insgesamt drei Anpressköpfen in Draufsicht, in einer Seitenansicht senkrecht zu einer Transportrichtung der Behälter sowie senkrecht zu der Bewegungsrichtung der Anpressköpfe und in einer gegenüber der Fig. 7 um 90° gedrehten Seitenansicht.

In den Figuren sind Behälter 1 in Form von Flaschen gezeigt, und dabei speziell in Form von Flaschen, die aus Kunststoff bzw. aus PET (Polyethylenterephthalat) durch Blasformen hergestellt sind. Die Behälter 1 sind mit einem flüssigen Füllgut gefüllt und verschlossen. Mehrere, d.h. bei der dargestellten Ausführungsform insgesamt sechs Behälter 1 bilden eine Behältergruppe 3.1, in der die Behälter 1 bei der dargestellten Ausführungsform in zwei Reihen mit jeweils drei Behältern 1 zusammengestellt und gegen einander anliegend über Kleberaufträge 2 eines Kontaktklebers unmittelbar, d.h. ohne eine Umverpackung zu dem jeweiligen Gebinde 3 verbunden sind. Die Kleberaufträge 2 sind auf die in der verdichteten Behältergruppe 3.1 sich berührenden Bereiche der Mantelflächen der Behälter 1 aufgebracht.

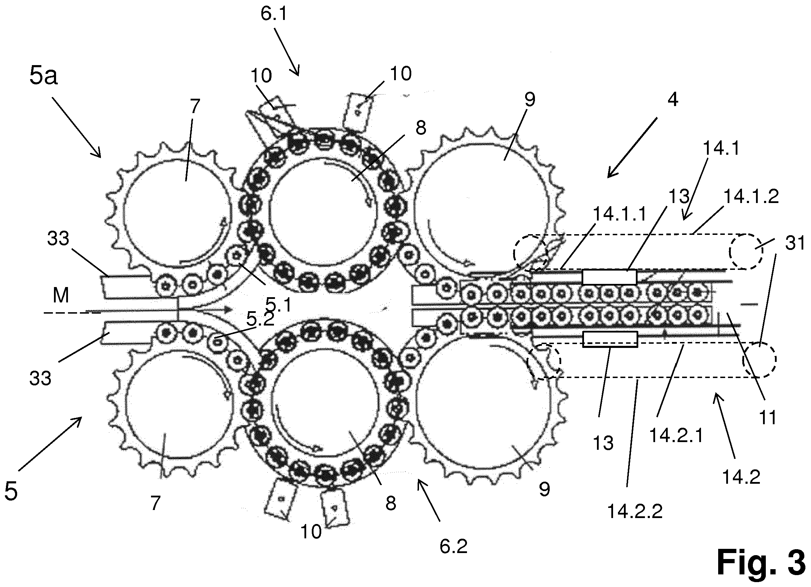

Zum Herstellen der Gebinde 3 aus den Behältern 1 dient die in der Fig. 3 allgemein mit 4 bezeichnete Vorrichtung, der die Behälter 1 aufrecht stehend, d.h. mit ihren Behälterachsen vertikal orientiert über zwei als Behältereinläufe dienende Behältertransporteure 5a und 5 gemäß der Erfindung in jeweils einem einspurigen verdichteten Behälterstrom 5.1 und 5.2 zugeführt werden, in dem die Behälter 1 in der Transportrichtung A jeweils dicht aneinander anschließen. Die Vorrichtung 4 sowie die Behältertransporteure 5 und 5a werden nachstehend näher im Detail beschrieben.

### Vorrichtung 4 zum Behandeln der Behälter:

Die Behälter 1 des über den Behältertransporteur 5a zugeführten Behälterstroms 5.1 werden einer Behandlungsstrecke 6.1 und die Behälter 1 des über den Behältertransporteur 5 zugeführten Behälterstroms 5.2 werden einer Behandlungsstrecke 6.2 zugeführt, und zwar jeweils von einem Transportstern 7 der Teil des Behältertransporteurs 5 bzw. 5a ist. In den Behälterströmen 5.1 und 5.2 sind die Behälter 1 in Transportrichtung voneinander beabstandet, d.h. sie weisen den für die Behandlungsstrecken 6.1 und 6.2 erforderlichen Teilungsabstand voneinander auf.

Auf den Behandlungsstrecken 6.1 und 6.2 erfolgt das lagerichtige Aufbringen der Kleberaufträge 2 auf die Behälter 1. Die Behandlungsstrecken 6.1 und 6.2 sind bei der dargestellten Ausführungsform identisch, aber spiegelsymmetrisch zu einer vertikalen Mittelebene M ausgeführt und umfassen u.a. einen Behandlungsstern 8 und einen Auslaufstern 9, die ebenso wie die Transportsterne 7 jeweils um eine vertikale Achse umlaufend angetrieben sind und mit einer Vielzahl von Behälteraufnahmen am Sternumfang versehen sind. Am Behandlungsstern 8 sind die Behälteraufnahmen so ausgeführt, dass mit ihnen der jeweilige Behälter 1 um seine vertikale Behälterachse gesteuert dreh- oder schwenkbar ist, um die Kleberaufträge 2 lagerichtig auf die Mantelfläche der Behälter 1 aufzubringen. Letzteres erfolgt durch Auftragsköpfe 10, die an den Behandlungssternen 8 mit diesen nicht mitbewegt vorgesehen sind. Sind für das Verbinden der Behälter 1 zu dem jeweiligen Gebinde 3 auf den Behältern 1 mehrere Kleberaufträge 2 erforderlich, so sind beispielsweise in Drehrichtung des Behandlungssternes 8 aufeinander folgend mehrere Auftragsköpfe 10 vorgesehen. Über den jeweiligen Transportstern 9 werden die mit den Kleberaufträgen 2 versehenen Behälter 1 an eine Transportstrecke 11 weitergeleitet, auf der die Behälter 1 wiederum zweispurig in einer Transportrichtung B weiterbewegt werden, die bei der dargestellten Ausführungsform richtungsgleich mit der Transportrichtung A ist. Bei der dargestellten Ausführungsform bilden die Behälter 1 der Behandlungsstrecke 5.1 die eine Spur und die Behälter 1 der Behandlungsstrecke 5.2 die andere Spur auf der Transportstrecke 11. Auf dieser werden aus dem zweispurigen, sich in der Transportrichtung B bewegenden Behälterstrom zunächst jeweils die Behältergruppen 3.1 gebildet, die den herzustellenden Gebinden 3 entsprechen und bei der dargestellten Ausführungsform insgesamt jeweils sechs Behälter 1 aufweisen, und zwar in zwei sich in Transportrichtung B erstreckenden Reihen jeweils drei Behälter 1. Die Behältergruppen 3.1 sind in Transportrichtung B voneinander beabstandet. Jede Behältergruppe 3.1 wird auf der Transportstrecke 11 während ihres Transportes verdichtet, d.h. die Behälter 1 jeder Behältergruppe 3.1 werden quer zur Transportrichtung B und auch in Transportrichtung B sowie gegen die Transportrichtung B aneinander angepresst, so dass die Verbindung der Behälter 1 jeder Behältergruppe 3.1 über die Kleberaufträge 2 zu dem Gebinde 3 in der gewünschten Weise erfolgt.

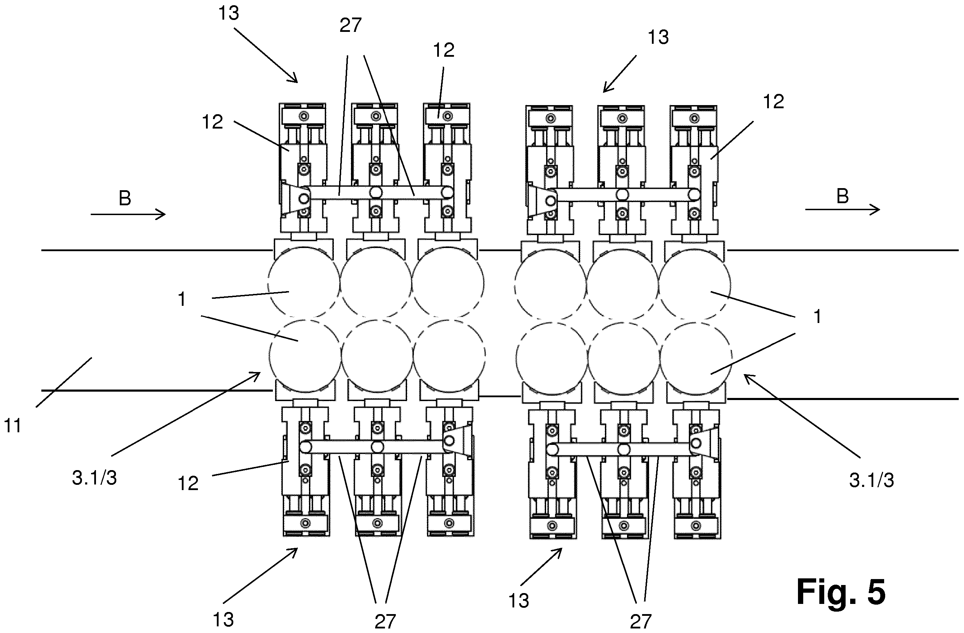

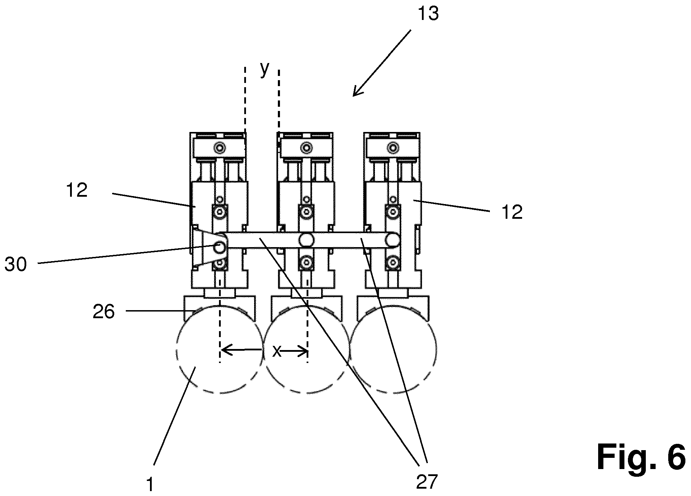

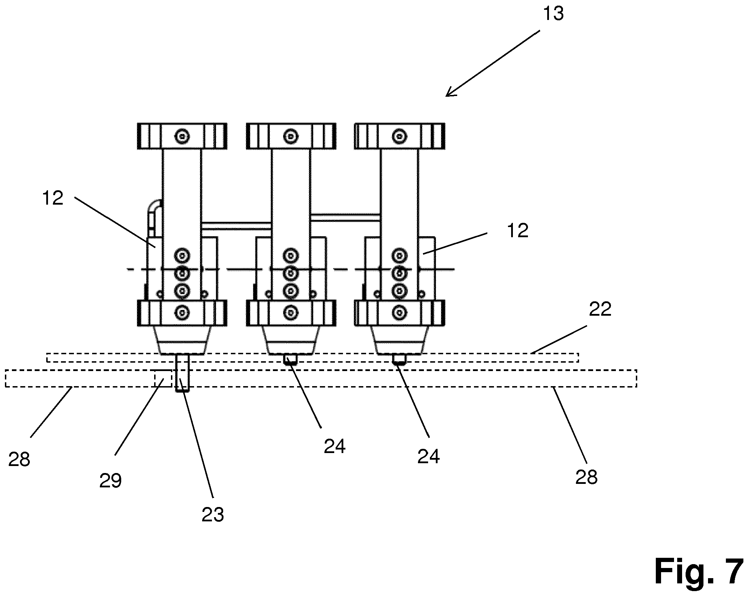

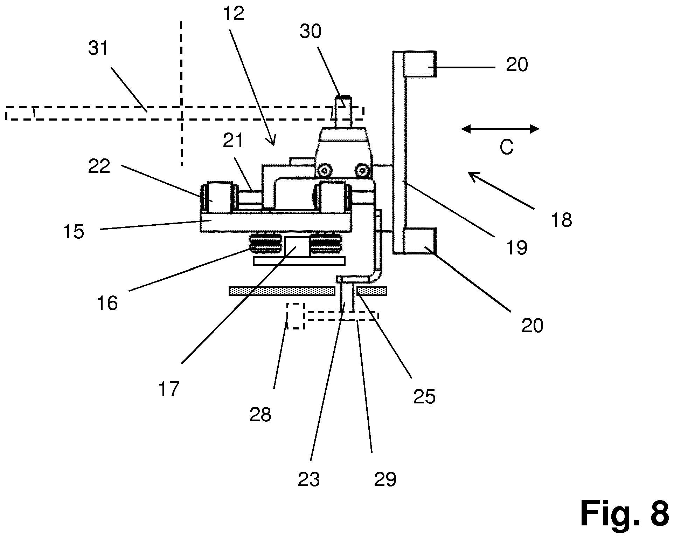

Zur Bildung der Behältergruppen 3.1, zum Verdichten der Behältergruppen 3.1 und zum Herstellen der Gebinde 3 ist eine Vielzahl von Anpressköpfen 12 vorgesehen, von denen der Anzahl der Behälter 1 in den Reihen der Gebinde 3 entsprechend jeweils drei Anpressköpfe 12 zu einer Anpresseinheit 13 zusammengefasst sind. Die Anpresseinheiten 13, die an beiden Seiten der Transportstrecke 11 vorgesehen sind, werden beim Betrieb der Vorrichtung 4 in der nachstehend noch näher beschriebenen Weise auf zwei in sich geschlossenen und seitlich von der Transportstrecke 11 verlaufenden Bewegungs- oder Umlaufbahnen 14.1 und 14.2 bewegt, und zwar u.a. auch auf den parallel zur Transportstrecke 11 bzw. zur Transportrichtung B verlaufenden und sich jeweils entlang einer Seite der Transportstrecke 11 erstreckenden Teillängen 14.1 bzw. 14.2 der Umlaufbahnen 14.1 und 14.2, und zwar dort in Transportrichtung B und derart, dass jeweils einer Anpresseinheit 13, die sich auf der Teillänge 14.1.1 an einer Seite der Transportstrecke 11 bewegt, senkrecht zur Transportrichtung B eine Anpresseinheit 13 unmittelbar gegenüberliegt, die sich auf der Teillänge 14.2.1 an der anderen Seite der Transportstrecke 11 bewegt, wie dies in der Fig. 5 dargestellt ist. Die somit paarweise auf beiden Seiten der Transportstrecke 11 vorgesehenen Anpresseinheiten 13 bewegen sich synchron und mit derselben Geschwindigkeit. Wie die Fig. 6 - 8 zeigen, bestehen die Anpressköpfe 12 u.a. jeweils aus einem Träger oder Schlitten 15, der mit an der Schlittenunterseite vorgesehenen Führungsrollen 16 an einer Führungsschiene 17 geführt ist, deren Verlauf der jeweiligen geschlossenen Umlaufbahn 14. 1 bzw. 14.2 entspricht. An der Oberseite des Schlittens 15 ist u.a. ein Kopfstück 19 in einer horizontalen oder im Wesentlichen horizontalen Achsrichtung senkrecht zur Transportrichtung B gesteuert verschiebbar vorgesehen, und zwar für einen Zustell- und Anpressbewegung (Doppelpfeil C der Fig. 8). Das über die der Transportstrecke 11 zugewandte Seite des Anpresskopfes 12 bzw. des Schlittens 15 wegstehende Kopfstück 19 weist bei der dargestellten Ausführungsform zwei an den Durchmesser der Behälter 1 angepasste Behälteraufnahmen 20 auf, die in vertikaler Richtung voneinander beabstandet und die den jeweiligen Behälter 1 auf einem Teil seines Umfangs, d.h. bei der dargestellten Ausführungsform auf weniger als den halben Umfang aufnehmen, und zwar an einem oberen und unteren Bereich. Für die Zustell- und Anpressbewegung entsprechend dem Doppelpfeil C sind an der den Aufnahme 20 abgewandten Rückseite des leistenartigen Kopfstücks 19 zwei parallel zueinander und im Abstand voneinander angeordnete Führungsstangen 21 mit jeweils einem Ende befestigt, die in entsprechenden Führungen 22 am Schlitten 15 geführt sind. Das jeweilige Kopfstück 19 bildet zusammen mit seinen Behälteraufnahmen 20 und den Führungsstangen 21 ein Formatteil 18, welches bei der Umstellung der Vorrichtung 4 auf Behälter 1 mit einem anderen Behälterdurchmesser und/oder mit einer anderen Behälterform problemlos an sämtlichen Anpressköpfen 12 ausgetauscht werden kann.

Für die gesteuerte Zustell- bzw. Anpressbewegung (Doppelpfeil C) ist jedes Kopfstück 12 mit einem nach unten wegstehenden Führungszapfen 23 bzw. 24 versehen, der zumindest beim Bewegen der Anpressköpfe 12 bzw. der Anpresseinheiten 13 entlang der Teillängen 14.1.1 und 14.2.1 in eine dortige Führungskurve 25 eingreift. Der Verlauf jeder Führungskurve 25 ist so gewählt, dass sich die Kopfstücke 19 vor der Übergabe der Behälter 1 vom Transportstern 9 an die Transportstrecke 11 zunächst außerhalb dieser Transportstrecke bzw. der Bewegungsbahn der Behälter 1 befinden, dann noch währen der Übergabe oder nach der Übergabe und beim Weiterbewegen entlang der Teillänge 14.1.1 bzw. 14.2.1 bzw. der Transportstrecke 11 zunehmend auf die Behälter 1 zubewegt wird, so dass schließlich sämtliche die jeweilige Behältergruppe 3.1 bildenden Behälter 1 zwischen den beiden sich auf den beiden Seiten der Transportstrecke 11 gegenüberliegenden Anpresseinheiten 13 bzw. deren Anpressköpfen 12 bzw. den Kopfstücken 19 erfasst und gegeneinander angepresst werden.

Sind die Behälter 1 zumindest in Grenzen elastisch verformbar, wie dies bei Behältern 1 aus Kunststoff der Fall ist, so erfolgt beispielsweise beim Anpressen der Behälter 1 mit den an der Transportstrecke 11 einander gegenüberliegenden Anpressköpfen 13 ein leichtes Verformen der Behälter 1 in der Weise, dass dadurch auch ein gegenseitiges Anpressen der in der jeweiligen Behältergruppe 3.1 in Transportrichtung aneinander anschließenden Behälter erreicht und die Klebeverbindung zwischen den Behältern 1 auch in Transportrichtung B zuverlässig hergestellt wird. Grundsätzlich besteht auch die Möglichkeit, die Führungen 22 zumindest an den beiden außen liegenden Anpressköpfen 12 jeder Anpresseinheit 13 so anzuordnen, dass die Zustell- und Anpressbewegung (Doppelpfeil C) dieser Anpressköpfe auch eine Bewegungskomponente auch in Transportrichtung B bzw. entgegen der Transportrichtung B aufweist.

Am Ende der für das Verdichten der Behältergruppen 3.1 dienenden Teillänge der Transportstrecke 11 weist die Führungskurve 25 wiederum einen solchen Verlauf auf, dass sich der Abstand dieser Führungskurve von der Transportstrecke 11 vergrößert und dadurch die Behälter von den Kopfstücken 19 freigegeben werden.

Zur Bildung der Behältergruppen 3.1 werden die über die Transportsterne 9 zugeführten Behälter 1 also kontinuierlich und bevorzugt noch im Bereich beider Transportsterne 9 von jeweils einem Anpresskopf 12 bzw. dessen Kopfstück 19 aufgenommen und mit dem jeweiligen Anpresskopf 12 bzw. der jeweiligen Anpresseinheit 13 in Transportrichtung B mitgeführt. Die Transportgeschwindigkeit der Anpresseinheiten 13 ist dabei vorzugsweise geringfügig größer als die Transportgeschwindigkeit, mit der die Behälter 1 der Transportstrecke 11 zugeführt werden, wodurch sich dann die in Transportrichtung B voneinander beabstandeten Behältergruppen 3.1 ergeben. Zum Verdichten der Behältergruppen 3.1 sind also jeweils zwei Anpresseinheiten 13 an den beiden Seiten der Transportstrecke 11 einander gegenüberliegend angeordnet. Gleichzeitig sind die Anpressköpfe 12 dieser Anpresseinheiten 13 paarweise und einander in einer horizontalen Achsrichtung senkrecht zur Transportrichtung B gegenüber liegend angeordnet.

Um ein unerwünschtes Verdrehen der Behälter 1 beim Verdichten der jeweiligen Behältergruppe 3.1 zu vermeiden, sind die Behälteraufnahmen 20 an ihrer Behälteranlagefläche mit einem Reibbelag 26 versehen, der eine erhöhte Reibung zwischen dem jeweiligen Behälter 1 und der Behälteraufnahme 20 erzeugt.

Wie erwähnt, sind jeweils drei Anpressköpfe 12 zu einer Anpresseinheit 13 zusammengefasst, und zwar bei der dargestellten Ausführungsform mechanisch dadurch, dass die die jeweilige Anpresseinheit 13 bildenden Anpressköpfe 12 über zwei Verbindungstangen oder -laschen 27 an ihrer Oberseite gelenkig miteinander derart verbunden sind, dass der Achsabstand x der Anpressköpfe 12 bzw. deren Aufnahmen 20 dem Durchmesser eines Behälters 1 entspricht. Außerdem sind die einander benachbarten Anpressköpfe 12 bzw. deren Schlitten 15 voneinander beabstandet (Abstand y der Fig.6) um so die Kurvengängigkeit der Anpresseinheiten 13 an den Umlenkbereichen der Umlaufbahnen 14.1 und 14.2 zu gewährleisten.

Die Bewegung der Anpresseinheiten 13 erfolgt zumindest auf den Teillängen 14.1.1 und 14.2.1 sowie auf Teillängen 14.1.2 und 14.2.2, auf denen die Anpresseinheiten 13 an Übergabebereiche zwischen dem jeweiligen Transportstern 9 und der Transportstrecke 11 zurückgeführt werden, mechanisch z.B. über eine umlaufend angetriebene Kette 28 (Schubkette), die in einem dem Abstand der Anpresseinheiten 13 entsprechenden Abstand Schubglieder 29 aufweist. Für den Weitertransport jeder Anpresseinheit 13 wird jeweils der längere, über die Führungskurve 25 nach unten wegstehende Führungszapfen 23, der bei der dargestellten Ausführungsform an dem bezogen auf die Transportrichtung B nachfolgenden Anpresskopf 12 jeder Anpresseinheit 13 vorgesehen ist, von dem Schubglied 29 erfasst.

An der Oberseite ist ein Anpresskopf 12 jeder Anpresseinheit 13, und zwar der bei der dargestellten Ausführungsform wieder der bezogen auf die Transportrichtung B nachfolgenden Anpresskopf 12 jeder Anpresseinheit 13, mit einem nach oben wegstehenden weiteren Führungszapfen 30 versehen, der an der jeweiligen Umlenkung der Umlaufbahn 14.1 bzw. 14.2 mit einer Verzahnung eines Zahnrades 31 in Eingriff kommt. Dieses ist um eine vertikale Achse umlaufend angetrieben, so dass an der jeweiligen Umlenkung die Anpresseinheiten 13 mittels des dortigen Zahnrades 31 weiterbewegt werden, während die Ketten 28 an der jeweiligen Umlenkung einen solchen Verlauf aufweisen, dass die Führungszapfen 23 dort jeweils außer Eingriff mit den Schubgliedern 29 sind. Hierdurch wird eine einwandfreie Bewegung der Anpresseinheiten 13 an den Umlenkbereichen der Umlaufbahn 14.1 bzw. 14.2 sowie insbesondere auch ein einwandfreier Einlauf der Anpresseinheiten in den Bereich der Transportstrecke 11 an den Transportsternen 9 und synchron mit der Bewegung dieser Transportsterne erreicht.

Es sind auch andere Maßnahmen möglich, um ein Verdichten der jeweiligen Behältergruppe 3.1 auch in Transportrichtung B zu erreichen. Beispielsweise können hierfür anstelle der Verbindungsstangen 27 Hydraulik- oder Pneumatikzylinder vorgesehen sein. Weiterhin ist auch eine Kinematik möglich, die bei der Zustell- und Anpressbewegung (Doppelpfeil C) der Kopfstücke 19 zugleich eine Reduzierung des Abstandes y zwischen den Anpressköpfen 12 der betreffenden Anpresseinheit 13 bewirkt. Das Anpressen der Behälter 1 in der Transportrichtung B bzw. entgegen dieser Transportrichtung beim Verdichten der jeweiligen Behältergruppe 3.1 kann ferner dadurch erreicht werden, dass der Achsabstand x, den die Behälteraufnahmen 20 voneinander aufweisen, etwas kleiner ist als der Durchmesser der Behälter 1. Vorstehend wurde davon ausgegangen, dass für die Bewegung der Anpresseinheiten 13 ein mechanischer Antrieb vorgesehen ist, und zwar in Form der beiden Ketten 28 sowie der Zahnräder 31. Bei einer weiteren Ausführungsform der Erfindung sind die Anpressköpfe 12 oder aber zumindest jeweils ein Anpresskopf 12 jeder Anpresseinheit 13 Bestandteil oder ein umlaufendes Element (Läufer) eines elektrischen Linearmotors. Hiermit ist dann insbesondere auch eine individuelle Steuerung der einzelnen Anpresseinheiten 13 möglich, speziell auch möglich, die benötigte Anzahl an Anpresseinheiten 13 zu reduzieren, und zwar dadurch, dass auf den die Anpresseinheiten 13 zurückführenden Teillängen 14.1.2 und 14.2.2 die dort zu jedem Zeitpunkt vorhandene Anzahl an Anpresseinheiten 13 reduziert werden kann.

Bei Ausbildung sämtlicher Anpressköpfe 12 als Bestandteil eines elektrischen Linearantriebs ist es dann weiterhin auch nicht erforderlich, Anpressköpfe 12 mechanisch zu einer Anpresseinheit 13 zu verbinden, vielmehr erfolgt durch entsprechende Ansteuerung eine "virtuelle" Verbindung von mehreren Anpressköpfen 12 zu der jeweiligen Anpresseinheit 13, der die Anpressköpfe 12 beispielsweise nur bis zum Verdichten der Behältergruppen 3.1 bzw. bis zur Herstellung der Gebinde 3 zugeordnet sind, während beim nächsten Durchlauf die die Anpressköpfe 12 in völlig anderer Weise zu Anpresseinheiten 13 zusammengeführt werden. Hierdurch ergeben sich eine weitere Flexibilität hinsichtlich des Einsatzes der Anpressköpfe 12 und dadurch eine Reduzierung der in der Vorrichtung 4 benötigten Anzahl dieser Köpfe.

Bei Ausbildung der Anpressköpfe 12 als Teil (Läufer) eines Linearantriebes sind die Anpressköpfe bevorzugt jeweils mit einer Antriebswicklung ausgebildet, während entlang der Umlaufstrecke 14.1 und 14.2 in ihrer Polarität abwechselnde Magnetpole beispielsweise durch Permanentmagneten oder durch entsprechende Magnetwicklungen gebildet sind.

Bei Ausbildung der Anpressköpfe 12 als Teil eines Linearantriebes kann das Verdichten der jeweiligen Behältergruppe 3.1 in Transportrichtung B und entgegen dieser Transportrichtung auch durch entsprechende Steuerung der Bewegung der Anpressköpfe 12 in Transportrichtung B und/oder entgegen dieser Transportrichtung erreicht werden.

Den beschriebenen Vorrichtungen ist auch gemeinsam,
dass die an den Anpressköpfen 12 vorgesehenen Kopfstücke 19 schnell und problemlos für einen Formatwechsel ausgetauscht werden können,
dass mit den Anpressköpfen 12 zum Verdichten der Behältergruppen 3.1 und Verbinden der Behälter 1 miteinander radial auf die Behälter 1 gerichtete Kräfte ausgeübt werden, so dass einander gegenüberliegende Behälter 1 gegeneinander angepresst werden,
dass die Anpressköpfe 12 durch geeignete Mittel eine auf die Behälter 1 gerichtete Kraft in der Art ausüben, dass benachbarte Behälter, die zwischen zwei einander gegenüberliegenden Anpresseinheiten 13 aufgenommen werden, gegeneinander angepresst werden.

### Behältertransporteur 5 bzw. 5a:

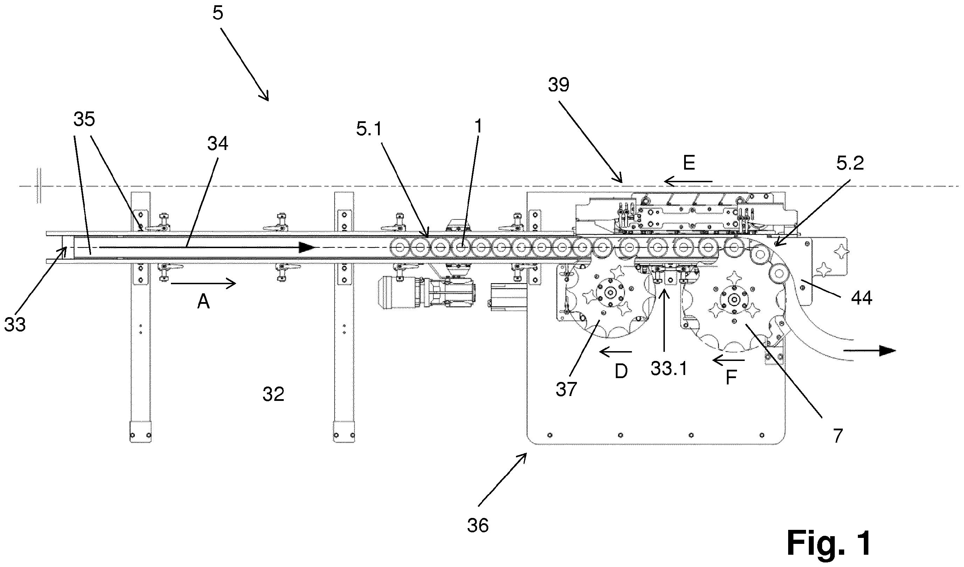

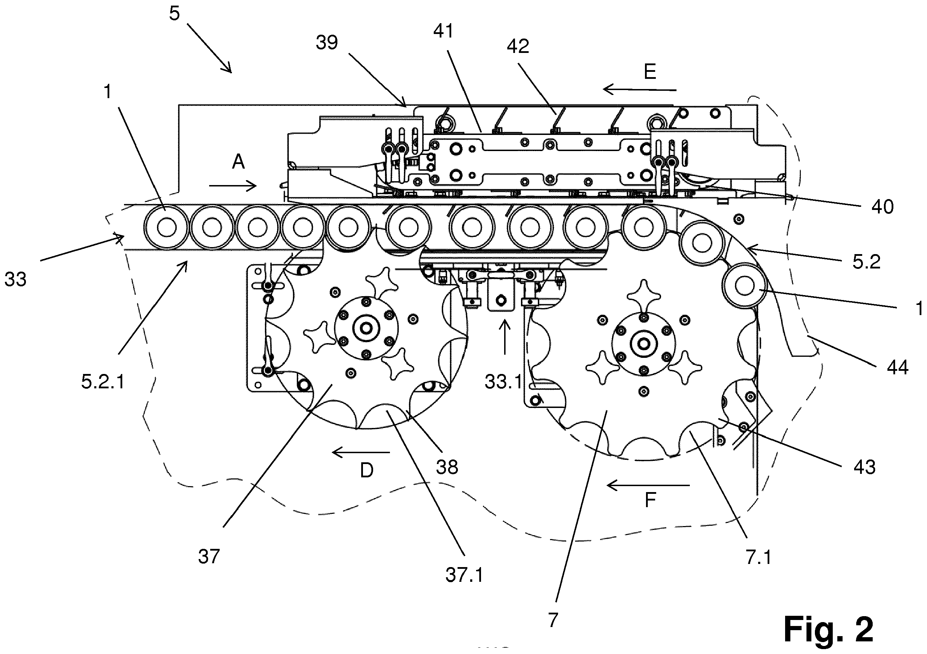

Die Fig. 1 und 2 zeigen den Behältertransporteur 5 mehr im Detail. Dieser umfasst u.a. ein Transportelement 32, auf welchem die Behälter 1 als dicht gepackter bzw. verdichteter einspuriger Behälterstrom 5.1 aufrecht stehend, d.h. mit ihren Behälterachsen in vertikaler Richtung oder im Wesentlichen in vertikaler Richtung orientiert in der Transportrichtung A transportiert werden. Das Transportelement 32, welches bei der dargestellten Ausführungsform eine geradlinige Transportstrecke 33 bildet, umfasst wenigstens ein eine in sich geschlossene Schlaufe bildendes und endlos umlaufend angetriebenes Transportband 34 sowie bedarfsweise seitliche Führungsgeländer 35. Das Transportband 34 bildet eine horizontale oder im Wesentlichen horizontale Transportfläche, auf der die Behälter 1 mit ihrem Boden aufstehen.

An der Transportstrecke 33 ist eine in den Fig. 1 und 2 allgemein mit 36 bezeichnete Einrichtung vorgesehen, mit der aus dem angeförderten Behälterstrom 5.1 ein umgeformter Behälterstrom 5.2 gebildet wird, in welchem die in Transportrichtung A aufeinanderfolgenden Behälter 1 einen gleichbleibenden vorgegebenen Abstand (Teilungsabstand) voneinander aufweisen, der dem Teilungsabstand der umfangsseitig offenen Behältertaschen oder Behälteraufnahmen 7.1 am Umfang des Transportsternes 7 entspricht, aber auch einem Teilungsabstand, den die Behälter zur Übergabe an eine Behälter-Maschine oder -Vorrichtung, beispielsweise zur Übergabe an die Vorrichtung 4 bzw. an den jeweiligen Behandlungsstern 8 aufweisen müssen.

Die Einrichtung 36 besteht u.a. aus einem Abteilelement in Form eines Abteilsterns 37, der an seinem Umfang in einer vorgegebenen Teilung eine Vielzahl von Behältertaschen oder Behälteraufnahmen 37.1 aufweist und dort weiterhin so ausgebildet ist, dass die jeweils zwischen zwei Behälteraufnahmen 37.1 gebildeten sternförmigen Vorsprünge spitz zulaufend geformt sind. Der Abteilstern 37 ist um eine vertikale Achse in Richtung des Pfeils D umlaufend angetrieben und derart angeordnet, dass er mit einem Teil seines Umfangs in die Transportstrecke 33 hineinreicht, dort während einer seiner Teilung entsprechenden Drehung mit einer Behälteraufnahme 37.1 jeweils einen Behälter 1 einem Teil seines Behälterquerschnitts aufnimmt und diesen dann mit einer seiner Teilung entsprechenden weiteren Drehung an einen Abschnitt 33.1 der Transportstrecke 33 weiterleitet, der eine Umformstrecke bildendet. Hierbei bewegt sich der Vorsprung 38, der in Drehrichtung D auf die betreffende Behälteraufnahme 37.1 folgt, zwischen den mit der Behälteraufnahme 37.1 mitgeführten und den nachfolgenden Behälter 1 hinein und hält diesen zumindest solange zurück bis er von einer bezogen auf die Drehrichtung D folgenden Behälteraufnahme 37.1 aufgenommen wird. Nach dem Passieren des Abteilsterns 37 weisen die Behälter einen gegenseitigen Abstand auf, der u.a. auch durch die Teilung des Abteilsterns 37 bestimmt ist.

Das Transportband 34 erstreckt sich idealerweise bis mindestens zum Übergabe- und Fassungsbereich in welchem Behälter 1 in den Einwirkbereich des Transportsterns 7 gelangen.

Um den dicht gepackten Behälterstrom vor dem Abteilstern 37 zu erreichen, ist die Transportgeschwindigkeit des Transportbandes 34 der Transportstrecke 33 gleich oder etwas größer als die Umfangsgeschwindigkeit des Abteilsterns 37, d.h. etwas größer als die Transportgeschwindigkeit, mit der der jeweilige, in einer Behälteraufnahme 37.1 aufgenommene Behälter 1 an den Abschnitt 33.1 weitergeleitet wird.

An dem in Transportrichtung A auf den Abteilstern 37 folgenden Abschnitt 33.1 ist an der dem Abteilstern 37 gegenüberliegenden Seite eine Taschenkette 39 vorgesehen, die als Umformeinheit zur Erzeugung oder streckenweise Festlegung des genauen Teilungsabstandes zwischen den mehreren Behältern 1 auf der Strecke zwischen dem Abteilstern 37 und dem nachfolgenden Transportstern 7 dient. Die Taschenkette 39 weist u.a. wenigstens ein über Umlenk- oder Kettenräder 40 umlaufend angetriebenes Kettenelement 41 auf, welches eine geschlossene horizontale oder im Wesentlichen horizontale Schlaufe bildet und an der Außenseite dieser Schlaufe mit einer Vielzahl von Mitnehmern oder Taschenelementen 42 versehen ist. Diese seitlich von dem Kettenelement bzw. von der Schlaufe wegstehenden Mitnehmer 42 besitzen in Umlaufrichtung E der Taschenkette 39 einen Abstand voneinander, der dem Teilungsabstand entspricht. Weiterhin ist die Taschenkette 39 so angeordnet und angetrieben, dass die Mitnehmer 42 an der sich in Transportrichtung A bewegenden Schlaufenlänge von der Seite her in Abschnitt 33.1 hineinreichen und jeder Behälter 1 nach dem Passieren des Abteilsterns 37 von einem Mitnehmer 42 in Transportrichtung A mitgeführt wird. Alternativ, aber nicht dargestellt, könnte eine vergleichbare Taschenkette auch vertikal umlaufen und bspw. Schubstäbe oder Taschenelemente in geeigneter Form zwischen die durch den Abteilstern 37 beabstandeten Behälter 1 einschwenken.

Da der gegenseitige Abstand der Mitnehmer 42 dem Teilungsabstand der Aufnahmen 7.1 des Transportsternes 7 und damit dem erforderlichen Teilungsabstand der nachfolgenden Behälterbehandlungsmaschine oder Behälterbehandlungsvorrichtung entspricht, werden die Behälter 1 mit der Taschenkette 39 auf den erforderlichen Teilungsabstand des Transportsterns 7 gebracht bzw. im geeigneten Teilungsabstand gehalten und nacheinander in jeweils eine Behälteraufnahme 7.1 dieses Transportsternes 7 hineinbewegt. Der Transportstern 7 ist synchron mit der Taschenkette 39 und dem Abteilstern 37 angetrieben, und zwar in Richtung des Pfeiles F derart, dass die Umfangsgeschwindigkeit des Transportsternes 7 gleich oder im Wesentlichen gleich der Geschwindigkeit ist, mit der sich die Mitnehmer 42 entlang des Transportstreckenabschnitts 33.1 bewegen.

Wie die Fig. 2 zeigt, weist der Transportstern 7 zwischen seinen Behälteraufnahmen 7.1 Vorsprünge 43 auf, die eine gegenüber den spitzen und krallenartigen Vorsprüngen 38 des Abteilsterns 37 wesentliche größere Breite in Umfangs- oder Drehrichtung F besitzen, sich zwar zu ihren radial außen liegenden Enden verjüngen, dort aber nicht spitz zulaufend, sondern stumpf oder abgerundet ausgebildet sind.

Mit 43 ist ein Führungselement bezeichnet, welches eine den Transportstern 7 auf einem Teil seines Umfangs umschließende kreisbogenförmige Führung für die in den Aufnahmen 7.1 aufgenommenen Behälter 1 bildet.

Der besondere Vorteil des Behältertransporteurs 5 besteht darin, dass die Umformung des dicht gedrängten Behälterstroms 5.1 in den Behälterstrom 5.2 durch die Taschenkette 39, die sich über die gesamte Länge des Abschnittes 33.1 erstreckt, in einer die Behälter 1 und deren Ausstattung (insb. Etiketten oder Bedruckungen) schonenden Weise erfolgt, und zwar ohne dass Scher- und/oder Relativbewegungen oder aber entsprechende Kräfte zwischen den Behältern und Funktionselementen des Behältertransporteurs 5 und dabei insbesondere zwischen den Behältern 1 und den Mitnehmern 42 ausgeübt werden.

In einer verbesserten Ausführungsform sind die Mitnehmer 42 der Transportkette sichelförmig ausgeführt, so dass eine horizontal linienförmige oder flächige Berührung der Behälter erfolgt, womit eine Verdrehung bzw. Relativbewegung der Behälter noch weiter vermieden wird.

Die Umschließung ist idealerweise derart, dass das Gegengeländer oder jegliches seitliches Geländer auf der Umformstrecke 33.1 zwischen Abteilstern 37 und dem Transportstern entfallen kann.

Wie oben ausgeführt, ist der Behältertransporteur 5 beispielsweise der Behältereinlauf der Behandlungsstrecke 6.2. Der dem Behältereinlauf der Behandlungsstrecke 6.1 bildende Behältertransporteur 5a ist bezogen auf die Mittelebene M spiegelsymmetrisch, aber ansonsten identisch zum Behältertransporteur 5 ausgebildet.

Vorstehend wurde davon ausgegangen, dass der Behältertransporteur 5 bzw. 5a den Behältereinlauf der Vorrichtung 4 zum Herstellen von Gebinden bilden. Es versteht sich, dass der Behältertransporteur 5 und/oder 5a in vorteilhafter Weise auch bei anderen Vorrichtungen zum Behandeln von Behältern, vorzugsweise als Behältereinlauf Verwendung finden kann, z.B. bei Vorrichtungen zum Reinigen und/oder Sterilisieren von Behältern 1, Füllmaschinen, Verschließern, Vorrichtungen zum Ausstatten von Behältern 1, wie beispielsweise Etikettiermaschinen, Maschinen oder Vorrichtungen zum Bedrucken von Behältern usw.

Bei einer bevorzugten Ausführungsform bilden der Behältertransporteur 5 oder 5a oder die Einrichtung 36 eine voll funktionsfähige Baueinheit, die als solche in bzw. an einer Behälterbehandlungsmaschine oder -anlage montiert und im Störungsfall auch ausgetauscht werden kann.

### Bezugszeichenliste

- 1: Behälter
- 2: Kleberauftrag
- 3.1: Behältergruppe
- 3: Gebinde
- 4: Vorrichtung
- 5, 5a: Behältertransporteur Behältereinlauf
- 5.1, 5.2: Behälterstrom
- 6.1, 6.2: Behandlungsstrecke
- 7: Transportstern
- 8: Behandlungsstern
- 9: Transportstern
- 10: Auftragskopf
- 11: Transportstrecke
- 12: Anpresskopf
- 13: Anpresseinheit
- 14.1, 14.2: Umlaufbahn
- 14.1.1, 14.1.2: Teillänge
- 14.2.1, 14.2.2: Teillänge
- 15: Schlitten
- 16: Führungsrolle
- 17: Führungsschiene
- 18: Formatteil
- 19: Kopfstück
- 20: Behälteraufnahme
- 21: Führungsstange
- 22: Führung
- 23, 24: Führungsstift
- 25: Führung
- 26: Reibbelag
- 27: Verbindungsstange
- 28: Kette
- 29: Schubglied
- 30: Führungszapfen
- 31: Zahnrad
- 32: Transportelement
- 33: Transportstrecke
- 33.1: Abschnitt der Transportstrecke 33
- 34: Transportband
- 35: Führungsgeländer
- 36: Einrichtung zur Erzeugung eines Teilungsabstandes
- 37: Abteilstern
- 37.1: Behälteraufnahme des Abteilsterns 37
- 38: Vorsprung
- 39: Taschen kette
- 40: Umlenk- oder Kettenrad
- 41: Kettenelement
- 42: Mitnehmer
- 43: Behälterführung

- A, B: Transportrichtung
- C: Zustell- und Presshub des Kopfstückes 19
- D: Drehrichtung des Abteilsterns 37
- E: Umlaufrichtung der Taschenkette 39
- F: Umlaufrichtung des Transportsternes 7
- x, y: Abstand

## Patentansprüche

1. Verfahren zum Umformen eines über eine Transportstrecke (33) angeförderten einspurigen Behälterstroms (5.1) aus aufstehenden Behältern (1) in einen über einen Transportstern (7) weitergeleiteten umgeformten Behälterstrom (5.2), in welchem die in jeweils einer Behälteraufnahme (7.1) des Transportsternes (7) angeordneten Behälter (1) einen dem Abstand der Behälteraufnahmen (7.1) entsprechenden Teilungsabstand voneinander aufweisen, **wobei** die Behälter (1) des angeförderten Behälterstroms (5.1) an einem an der Transportstrecke (33) vorgesehenen Abteilelement (37) voreinander beabstandet und vereinzelt an den Transportstern (7) weitergeleitet werden, wobei zwischen dem Abteilelement (37) und dem Transportstern (7) eine Umformstrecke (33.1) angeordnet ist, auf welcher mittels jeweils wenigstens einem Mitnehmer (42) einer den Teilungsabstand formenden Umformeinrichtung (39) die Behälter (1) weiterbewegt werden, wobei die Behälter (1) mittels einer Vielzahl von in dem Teilungsabstand angeordneten Mitnehmern (42) weiterbewegt werden, die an einem umlaufend angetriebenen ketten- oder bandförmigen Element (41) angeordnet sind, **dadurch gekennzeichnet, dass** als Abteilelement ein um eine zur Achse der Behälter (1) parallele oder im Wesentlichen parallele Achse umlaufender Abteilstern (37) verwendet ist, der an seinem Umfang eine Vielzahl von taschenartigen, umfangsseitig offenen Behälteraufnahmen (37.1) zur Aufnahme jeweils eines Behälters (1) aufweist, und der seitlich an der Transportstrecke (33) so angeordnet ist, dass beim Drehen des Abteilsterns (37) um eine Teilung seiner Behälteraufnahmen (37.1) jeweils der in Transportrichtung (A) erste Behälter (1) des angeförderten Behälterstroms (5.1) von einer Behälteraufnahme (37.1) des Abteilsterns (37) aufgenommen und bei einem Weiterdrehen des Abteilsterns (37) um wenigstens eine Teilung an die Umformstrecke (33.1) weitergeleitet wird, und wobei der Transportstern (7) synchron mit der Umformeinrichtung (39) und dem Abteilstern (37) angetrieben ist, und zwar derart in eine Richtung (F), dass die Umfangsgeschwindigkeit des Transportsternes (7) gleich oder im Wesentlichen gleich der Geschwindigkeit ist, mit der sich die Mitnehmer (42) entlang der Umformstrecke (33.1) bewegen.

2. Verfahren nach Anspruch 1. **dadurch gekennzeichnet, dass** der angeförderte Behälterstrom (5.1) ein dicht gepackter Behälterstrom ist.

3. Verfahren nach Anspruch 1 oder 2, **dadurch gekennzeichnet, dass** die Transportgeschwindigkeit des angeförderten Behälterstroms (5.1) größer ist als die Geschwindigkeit, mit der das Abteilelement (37) die Behälter (1) an die Umformstrecke (33.1) weiterleitet.

4. Verfahren nach einem der vorhergehenden Ansprüche, **dadurch gekennzeichnet, dass** die Transportgeschwindigkeit des band- und/oder kettenartigen Elementes (41) der Umformeinrichtung (39) gleich oder geringfügig größer ist als die Transportgeschwindigkeit eines Transportelementes oder Transportbandes (34) der Umformstrecke (33.1).

5. Behattertransporteur zum Umformen eines über eine Transportstrecke (33) angeforderten einspurigen Behälterstroms (5.1) in einen über einen Transportstern (7) weitergeleiteten umgeformten Behälterstrom (5.2), in welchem die in jeweils einer Behälteraufnahme (7.1) des Transportsternes (7) angeordneten Behälter (1) einen dem Abstand der Behälteraufnahmen (7.1) entsprechenden Teilungsabstand aufweisen, **wobei** an der Transportstrecke (33) ein Abteilelement (37) vorgesehen ist, mit dem die Behälter (1) des angeförderten Behälterstroms (5.1) nacheinander und vereinzelt an eine dem Transportstern (7) in Transportrichtung (A) vorausgehende Umformstrecke (33.1) weitergeleitet werden, und wobei an der Umformstrecke (33.1) eine Umformeinrichtung (39) vorgesehen ist, die an einem umlaufend angetriebenen ketten- oder bandförmigen Element (41) eine Vielzahl von in dem Teilungsabstand angeordneten Mitnehmern (42) aufweist, die in die Umformstrecke (33.1) hineinreichen und die Behälter (1) an den Transportstern (7) mitführen, **dadurch gekennzeichnet, dass** das Abteilelement ein um eine zur Achse der Behälter (1) parallele oder im Wesentlichen parallele Achse umlaufender Abteilstern (37) ist, der an seinem Umfang eine Vielzahl von taschenartigen, umfangsseitig offenen Behälteraufnahmen (37.1) zur Aufnahme jeweils eines Behälters (1) aufweist und der seitlich an der Transportstrecke (33) so angeordnet ist, dass beim Drehen des Abteilsterns (37) um eine Teilung seiner Behälteraufnahmen (37.1) jeweils der in Transportrichtung (A) erste Behälter (1) des angeförderten Behälterstroms (5.1) von einer. Behälteraufnahme (37.1) des Abteilsterns (37) aufgenommen und bei einem Weiterdrehen des Abteilsterns (37) um wenigstens eine Teilung an die Umformstrecke (33.1) weitergeleitet wird, und dass der Transportstern (7) synchron mit der Umformeinrichtung (39) und dem Abtastern (37) antreibbar ist, und zwar derart in eine Richtung (F), dass die Umfangsgeschwindigkeit des Transportsternes (7) gleich oder im Wesentlichen gleich der Geschwindigkeit ist, mit der die Mitnehmer (42) entlang der Umformstrecke (33.1) bewegbar sind

6. Behältertransporteur nach Anspruch 5, **dadurch gekennzeichnet, dass** die Umformeinrichtung (39) seitlich an der Transportstrecke (33) derart angeordnet ist, dass die Mitnehmer (42) von dieser Seite her in die Transportstrecke (33) hineinreichen.

7. Behältertransporteur nach einem der vorhergehenden Ansprüche 5 oder 6, **dadurch gekennzeichnet, dass** das wenigstens eine ketten- oder riemenartige Element (41) eine Schlaufe bildet, welche in einer Ebene angeordnet ist, die senkrecht oder im Wesentlichen senkrecht zu den Achsen der Behälter (1) orientiert ist.

8. Behältertransporteur nach Anspruch 7, **dadurch gekennzeichnet, dass** sich die von dem wenigstens einen riemen- oder kettenartigen Element (41) gebildete Schlaufe mit einer in der Transportrichtung (A) umlaufenden Schlaufenlänge entlang der Umformstrecke (33.1), vorzugsweise entlang der gesamten Umformstrecke (33.1) erstreckt.

9. Behältertransporteur nach einem der vorhergehenden Ansprüche 5 oder 6, **dadurch gekennzeichnet, dass** der Abteilstern (37) zwischen seinen Behälteraufnahmen (37.1) spitz zulaufende Vorsprünge (38) aufweist.

10. Vorrichtung zum Behandeln von Behältern mit wenigstens einem Behältereinlauf, **dadurch gekennzeichnet, dass** der wenigstens eine Behältereinlauf von einem Behältertransporteur nach einem der vorhergehenden Ansprüche 5 bis 9 gebildet ist.

11. Vorrichtung nach Anspruch 10, **dadurch gekennzeichnet, dass** sie zum Reinigen, Sterilisieren, Füllen, Verschließen von Behältern oder zum Aufbringen von Ausstattungsmerkmalen auf die Behälter ausgebildet ist.

12. Vorrichtung nach Anspruch 10, **dadurch gekennzeichnet, dass** sie zum Herstellen von Gebinden (3) aus Behältergruppen (3.1) ausgebildet ist, die jeweils in wenigstens zwei Reihen zumindest einen Behälter (1) aufweisen, dass sie hierfür wenigstens zwei Behandlungsstrecken (6.1, 6.2), denen die Behälter jeweils über einen Behältertransporteur (5, 5a) als Behältereinlauf zugeführt werden und auf denen die Behälter (1) mit Kleberaufträgen (2) eines Klebers versehen werden, eine Transportstrecke (11), die auf die wenigstens zwei Behandlungsstrecken (6.1, 6.2) in einer Transportrichtung der Behälter (1) zur Ausbildung eines wenigstens zweispurigen Behälterstroms folgt, sowie Mittel an der Transportstrecke (11) aufweist, und zwar Mittel zum Abtrennen der Behältergruppen (3.1) aus dem Behälterstrom und zum Verdichten der Behältergruppen (3.1) unter Verbinden der Behälter (1) jeder Behältergruppe (3.1) an den Kleberaufträgen (2) zu einem Gebinde.

## Claims

1. Method for rearranging a container flow (5.1), conveyed via a conveying segment (33), of containers (1) standing upright, into a rearranged container flow (5.2) which is further conveyed via a star-shaped conveyor (7), in which rearranged container flow the containers (1) which are each arranged in a container receptacle (7.1) of the star-shaped conveyor (7), are spaced from each other by a separation distance that corresponds to the distance between the container receptacles (7.1), wherein the containers (1) of the conveyed container flow (5.1) are spaced from one another at a separating element (37) provided at the conveying segment (33), and are conveyed individually to the star-shaped conveyor (7), wherein a rearranging segment (33.1) is arranged between the separating element (37) and the star-shaped conveyor (7), on which segment, by means in each case of at least one carrier element (42) of a rearranging device (39), forming the separation distance, the containers (1) are moved onwards, wherein the containers (1) are moved onwards by means of a plurality of carrier elements (42) arranged at the separation distance, which are arranged at a chain-type or band-type element (41), driven such as to circulate,
**characterised in that**
as a separation element, use is made of a separator star (37), circulating about an axis parallel or essentially parallel to the axis of the containers (1), which comprises at its circumference a plurality of pocket-type container receptacles (37.1) open on the circumference side, for receiving one container (1) in each case, and which is arranged laterally to the conveying segment (33) in such a way that, at the rotation of the separating star (37) by one division of its container receptacles (37.1), in each case the first container (1) in the conveying direction (A) of the conveyed container flow (5.1) is taken up by a container receptacle (37.1) of the separating star (37), and, at a further rotation of the separating star (37), is conveyed by one division further towards the rearranging segment (33.1), and wherein the star-shaped conveyor (7) is driven in synchrony with the rearranging device (39) and the separating star (37), and specifically in such a way in a direction (F) that the circumferential speed of the star-shaped conveyor (7) is the same or essentially the same as the speed at which the carrier element (42) moves along the rearranging segment (33.1).

2. Method according to claim 1, **characterised in that** the conveyed container flow (5.1) is a densely packed container flow.

3. Method according to claim 1 or 2, **characterised in that** the conveying speed of the conveyed container flow (5.1) is greater than the speed at which the separating element (37) conveys the containers (1) onwards to the rearranging segment (33.1).

4. Method according to any one of the preceding claims, **characterised in that** the conveying speed of the band-type or chain-type element (41) of the rearranging device (39) is the same or slightly greater than the conveying speed of a conveying element or conveying band (34) of the rearranging segment (33.1).

5. Container conveyor for rearranging a single-track container flow (5.1) being conveyed over a conveying segment (33) into a rearranged container flow (5.2) which is further conveyed via a star-shaped conveyor (7), in which rearranged container flow the containers (1) which are each arranged in a container receptacle (7.1) of the star-shaped conveyor (7), exhibit a separation distance corresponding to the distance between the container receptacles (7.1), **wherein** a separating element (37) is provided at the conveying segment (33), with which the containers (1) of the conveyed container flow (5.1) are conveyed further one after another and individually to a rearranging segment (33.1), upstream of the star-shaped conveyor (7) in the conveying direction (A), and wherein a rearranging device (39) is provided at the rearranging segment (33.1), which comprises, at a chain-type or band-type element (41) which is driven such as to circulate, a plurality of carrier elements (42) arranged at the separation distance, which extend into the rearranging segment (33.1) and carry the containers (1) to the star-shaped conveyor (7), **characterised in that** the separating device is a separating star (37) circulating about an axis parallel or essentially parallel to the axis of the containers (1), which comprises at its circumference a plurality of pocket-type container receptacles (37.1) open on the circumference side, for receiving one container (1) in each case, and which is arranged laterally to the conveying segment (33) in such a way that, at the rotation of the separating star (37) by one division of its container receptacles (37.1), in each case the first container (1) in the conveying direction (A) of the conveyed container flow (5.1) is taken up by a container receptacle (37.1) of the separating star (37), and, and, at a further rotation of the separating star (37), is conveyed by one division further towards the rearranging segment (33.1), and wherein the star-shaped conveyor (7) is driven in synchrony with the rearranging device (39) and the separating star (37), and specifically in such a way in a direction (F) that the circumferential speed of the star-shaped conveyor (7) is the same or essentially the same as the speed at which the carrier element (42) can be moved along the rearranging segment (33.1).

6. Container conveyor according to claim 5, **characterised in that** the rearranging device (39) is arranged laterally at the conveying segment (33) in such a way that the carrier elements (42) extend from this side into the conveying segment (33).

7. Container conveyor according to any one of the preceding claims 5 or 6, **characterised in that** the at least one chain-type or belt-type element (41) forms a loop, which is arranged in a plane which is oriented perpendicular or essentially perpendicular to the axes of the container (1).

8. Container conveyor according to claim 7, **characterised in that** the loop formed by the at least one belt-type or chain-type element (41) extends with a loop length, circulating in the conveying direction (A), along the rearranging segment (33.1), preferably along the entire rearranging segment (33.1).

9. Container conveyor according to any one of the preceding claims 5 or 6, **characterised in that** the separating star (37) comprises projections (38) tapering to a point between its container receptacles (37.1).

10. Device for handling containers with at least one container inlet, **characterised in that** the at least one container inlet is formed from a container conveyor according to any one of the preceding claims 5 to 9.

11. Device according to claim 10, **characterised in that** it is configured for cleaning, sterilising, filling, and closing of containers or for the application of fitting features onto the containers.

12. Device according to claim 10, **characterised in that** it is configured for producing clusters (3) from container groups (3.1), which in each case comprise at least one container (1) in at least two rows, that for this purpose it comprises at least two treatment segments (6.1, 6.2), to which the containers are conveyed in each case via a container conveyor (5, 5a) as a container inlet, and on which the containers (1) are provided with adhesive applications (2) of an adhesive, a conveying segment (11), which follows the at least two treatment segments (6.1, 6.2) in a conveying direction of the containers (1), so as to form an at least two-track conveyor flow, as well as means at the conveying segment (11), and specifically means for separating the container groups (3.1) out of the container flow and for compacting the container groups (3.1), by connecting the containers (1) of each container group (3.1) at the adhesive application points (2) to form a cluster.

## Revendications

1. Procédé de transformation d'un flux de récipients (5.1) monovoie acheminé via une voie de transport (33) de récipients debout (1) en un flux de récipients (5.2) transformé transféré via une étoile de transport (7), dans lequel les récipients (1) agencés dans respectivement un logement de récipient (7.1) de l'étoile de transport (7) présentent l'un par rapport à l'autre une distance de séparation correspondant à la distance des logements de récipient (7.1), dans lequel les récipients (1) du flux de récipients (5.1) acheminé sont transférés à l'étoile de transport (7) espacés l'un de l'autre et séparément au niveau d'un élément de séparation (37) prévu au niveau de la voie de transport (33), dans lequel entre l'élément de séparation (37) et l'étoile de transport (7) une voie de transformation (33.1) est agencée, sur laquelle les récipients (1) sont déplacés au moyen de respectivement au moins un entraîneur (42) d'un dispositif de transformation (39) formant la distance de séparation, dans lequel les récipients (1) sont déplacés au moyen d'une pluralité d'entraîneurs (42) agencés dans la distance de séparation, qui sont agencés au niveau d'un élément en forme de chaîne ou de bande (41) entraîné en rotation,
**caractérisé en ce que**
une étoile de séparation (37) tournant autour d'un axe parallèle ou sensiblement parallèle à l'axe des récipients (1) est utilisée en tant qu'élément de séparation, qui présente sur sa périphérie une pluralité de logements de récipient (37.1) en forme de poche ouverts côté périphérique pour la réception de respectivement un récipient (1), et qui est agencée latéralement à la voie de transport (33) de telle sorte que lors de la rotation de l'étoile de séparation (37) autour d'une division de ses logements de récipient (37.1), respectivement le premier récipient (1) dans le sens de transport (A) du flux de récipients (5.1) acheminé soit reçu par un logement de récipient (37.1) de l'étoile de séparation (37) et que lors d'une poursuite de la rotation de l'étoile de séparation (37) autour d'au moins une division il soit transféré à la voie de transformation (33.1), et dans lequel l'étoile de transport (7) est entraînée de manière synchrone avec le dispositif de transformation (39) et l'étoile de séparation (37), et ce dans une direction (F) de telle sorte que la vitesse périphérique de l'étoile de transport (7) est égale ou sensiblement égale à la vitesse à laquelle les entraîneurs (42) se déplacent le long de la voie de transformation (33.1).

2. Procédé selon la revendication 1, **caractérisé en ce que** le flux de récipients (5.1) acheminé est un flux de récipients emballés de manière étanche.

3. Procédé selon la revendication 1 ou 2, **caractérisé en ce que** la vitesse de transport du flux de récipients (5.1) acheminé est supérieure à la vitesse à laquelle l'élément de séparation (37) transfère les récipients (1) à la voie de transformation (33.1).

4. Procédé selon l'une quelconque des revendications précédentes, **caractérisé en ce que** la vitesse de transport de l'élément en forme de bande et/ou de chaîne (41) du dispositif de transformation (39) est égale ou légèrement supérieure à la vitesse de transport d'un élément de transport ou bande de transport (34) de la voie de transformation (33.1).

5. Convoyeur de récipients pour la transformation d'un flux de récipients (5.1) monovoie acheminé via une voie de transport (33) en un flux de récipients (5.2) transformé transféré via une étoile de transport (7), dans lequel les récipients (1) agencés dans respectivement un logement de récipient (7.1) de l'étoile de transport (7) présentent une distance de séparation correspondant à la distance des logements de récipient (7.1), dans lequel un élément de séparation (37) est prévu au niveau de la voie de transport (33), avec lequel les récipients (1) du flux de récipients (5.1) acheminé sont transférés séparément et l'un après l'autre à une voie de transformation (33.1) précédant l'étoile de transport (7) dans la direction de transport (A), et dans lequel est prévu au niveau de la voie de transformation (33.1) un dispositif de transformation (39), qui présente au niveau d'un élément en forme de chaîne ou de bande (41) entraîné en rotation, une pluralité d'entraîneurs (42) agencés dans la distance de séparation, qui pénètrent dans la voie de transformation (33.1) et entraînent les récipients (1) au niveau de l'étoile de transport (7), **caractérisé en ce que** l'élément de séparation est une étoile de séparation (37) tournant autour d'un axe parallèle ou sensiblement parallèle à l'axe des récipients (1), qui présente sur sa périphérie une pluralité de logements de récipient (37.1) en forme de poche ouverts côté périphérique pour la réception de respectivement un récipient (1), et qui est agencée latéralement à la voie de transport (33) de sorte que lors de la rotation de l'étoile de séparation (37) autour d'une division de ses logements de récipient (37.1) respectivement le premier récipient (1) dans le sens de transport (A) du flux de récipients (5.1) acheminé soit reçu par un logement de récipient (37.1) de l'étoile de séparation (37) et que lors d'une poursuite de la rotation de l'étoile de séparation (37) autour d'au moins une division il soit transféré à la voie de transformation (33.1), et que l'étoile de transport (7) peut être entraînée de manière synchrone avec le dispositif de transformation (39) et l'étoile de séparation (37), et ce dans une direction (F) de telle sorte que la vitesse périphérique de l'étoile de transport (7) est égale ou sensiblement égale à la vitesse à laquelle les entraîneurs (42) sont déplaçables le long de la voie de transformation (33.1).

6. Convoyeur de récipients selon la revendication 5, **caractérisé en ce que** le dispositif de transformation (39) est agencé latéralement à la voie de transport (33) de telle sorte que les entraîneurs (42) pénètrent depuis ce côté dans la voie de transport (33).

7. Convoyeur de récipients selon l'une quelconque des revendications précédentes 5 ou 6, **caractérisé en ce que** l'au moins un élément en forme de chaîne ou de courroie (41) forme une boucle, laquelle est agencée dans un plan qui est orienté perpendiculairement ou sensiblement perpendiculairement aux axes des récipients (1).

8. Convoyeur de récipients selon la revendication 7,
**caractérisé en ce que** la boucle formée par l'au moins un élément en forme de chaîne ou de courroie (41) s'étend avec une longueur de boucle tournant dans le sens de transport (A) le long de la voie de transformation (33.1), de préférence le long de l'ensemble de la voie de transformation (33.1).

9. Convoyeur de récipients selon l'une quelconque des revendications précédentes 5 ou 6, **caractérisé en ce que** l'étoile de séparation (37) présente des saillies (38) pointues entre ses logements de récipient (37.1).

10. Dispositif de traitement de récipients avec au moins une entrée de récipients, **caractérisé en ce que** l'au moins une entrée de récipients est formée par un convoyeur de récipients selon l'une quelconque des revendications précédentes 5 à 9.

11. Dispositif selon la revendication 10, **caractérisé en ce qu'**il est réalisé pour le nettoyage, la stérilisation, le remplissage, le bouchage de récipients ou pour l'application d'éléments caractéristiques sur les récipients.

12. Dispositif selon la revendication 10, **caractérisé en ce qu'**il est réalisé pour la fabrication d'emballages (3) de groupes de récipients (3.1), qui présentent respectivement au moins un récipient (1) dans au moins deux rangées, qu'il présente pour cela au moins deux voies de traitement (6.1, 6.2), auxquelles les récipients sont amenés respectivement par le biais d'un convoyeur de récipients (5, 5a) en tant qu'entrée de récipients et sur lesquelles les récipients (1) sont dotés d'applications de colle (2) d'une colle, une voie de transport (11), qui suit les au moins deux voies de traitement (6.1, 6.2) dans un sens de transport des récipients (1) pour la réalisation d'un flux de récipients à au moins deux voies, ainsi que des moyens au niveau de la voie de transport (11), et des moyens de séparation des groupes de récipients (3.1) du flux de récipients et de compactage des groupes de récipients (3.1) par liaison des récipients (1) de chaque groupe de récipients (3.1) au niveau des applications de colle (2) en un emballage.
